# EUROPEAN PATENT SPECIFICATION

(11) **EP 1 599 027 B1**
(45) Date of publication and mention of the grant of the patent: **22.02.2012**
(21) Application number: 05076297.0
(22) Date of filing: 17.05.2005
(51) Int. Cl.: H04M 11/06, H04L 27/26

(54) **Apparatus and method to reduce noise estimation error in digital subscriber line communication**
Gerät und Verfahren zum Vermindern von Rauschschätzungsfehlern bei DSL Kommunikation
Appareil et procédé pour la réduction de l'erreur d'estimation de bruit dans la communication DSL

(30) Priority: 17.05.2004 US 847275
(43) Date of publication of application: 23.11.2005
(73) Proprietor: Texas Instruments Incorporated, Dallas, TX 75265 (US)
(72) Inventor: Jani, Umesh G., Plano, TX 75243 (US); Hunt, Austin, Dallas, TN 75243 (US)
(74) Representative: Holt, Michael

(56) References cited:
- US-A- 5 852 630
- US-A1- 2001 036 237
- US-B1- 6 633 545
- PATENT ABSTRACTS OF JAPAN vol. 2003, no. 02, 5 February 2003 (2003-02-05) & JP 2002 314492 A (NEC MIYAGI LTD), 25 October 2002 (2002-10-25)

## Description

### FIELD OF THE INVENTION

The present invention is directed, in general, to communications and, more specifically, to a method for reducing noise estimation error during a digital subscriber line (DSL) communication session and a DSL modem incorporating the same.

### BACKGROUND OF THE INVENTION

Currently, various means are used to connect computers to networks such as the Internet. Dialup modems, satellites and coaxial cable are two examples of such means. Another is Digital Subscriber Line (DSL), which uses Plain Old Telephone Service (POTS) analog telephone lines as a channel to provide relatively high speed network connections between DSL modems located at a central office (CO) and the customer's premises, commonly referred to as customer premises equipment (CPE).

An Asymmetric Digital Subscriber Line (ADSL) is one type of DSL in which data is received ("downloaded" or "downstreamed") from the CO to the CPE at a higher rate than it is transmitted ("uploaded" or "upstreamed") from the CPE to the CO. The downstream rate, for example, may be between 32 kbps and 16 Mbps, and the upstream rate may be between 32kbps and 1.5 Mbps. Typically, an ADSL communication channel includes up to 224 subchannels of frequencies, or tones, for sending data downstream and up to 64 tones for sending data upstream.

An ADSL communications session typically begins when a CPE modem, or simply "transmitter," initiates communication with a CO modem, or "receiver." After initiating, the transmitter and receiver engage in a training period where channel quality is measured and parameters such as communication rate, channel identification and error correction techniques are established. During the signal-to-noise (SNR) measurement phase which is a part of the training period, the receiver determines a frequency-dependent SNR for the channel. Following the SNR measurement phase, the receiver performs bit allocation based on the measured SNR for each tone or sub-channel. The receiver allocates bits to each tone to provide a desired margin between signal and noise during actual communication of user data between the modems (sometimes colloquially referred to as "showtime"). Those tones subject to lower SNR are assigned fewer bits, while those tones having a higher SNR are assigned more bits.

During the SNR measurement phase, the receiver often miscalculates and/or underestimates the actual noise that will be present during showtime. The mis-estimation by the receiver could be due to several factors including underestimation of echo interference due to transmission from the receiver, mis-estimation of coding gain, etc. This mis-estimation causes the receiver to overestimate the actual SNR resulting in the ADSL connection overestimating the data rate during the SNR measurement phase than the receiver can provide for a given (or required) steady-state margin during showtime. As a result of this overestimation, the receiver's steady state margin drops from the estimated (unreal) value obtained during the SNR measurement phase.

Typically, the transmitter does not have the ability or control to correct or avoid the noise mis-estimation by the receiver. Additionally, the noise mis-estimation by the receiver could be exacerbated due to signal shaping used by the transmitter causing the receiver to "overload" tones that are most sensitive and/or susceptible to the mis-estimation described above.

Accordingly, what is needed in the art is an improved method of training modems for communicating. More specifically, what is needed is an improved modem that reduces the effect of (reduces) noise mis-estimation during the training period between a transmitter and receiver.

US patent application 5852630 describes a DSL communications device which has a memory associated with a receiver section for storing precoder coefficients, so that at a later time, the device may initiate a warm start activation sequence wherein the last know channel parameters are used to train the equalizer. this significantly reduces the amount cf equalizer training required by eliminating the requirement that the aforementioned coefficients be transferred between DSL devices. US patent no. 6633545 describes a system for determining the data rate capacity of a digital subscriber line. The system comprises a number of subscribers coupled to a communication server using twisted pair subscriber lines, whereby a memory coupled to the server stores attenuation and noise information for the subscriber lines which a processor uses for determining the data rate capacity of the subscriber lines. US patent application 2001/0036237 describes a method for processing data received from a communications channel in finite precision arithmetic applications.

### SUMMARY OF THE INVENTION

The present invention addresses the above-discussed deficiencies of the prior art by introducing the broad concept of deliberately injecting noise in the frequency domain during the training period, such that the noise margin at the receiver more closely resembles that of the substantive communication session once the noise is removed and the margin equalization process is completed at the receiver. Instead of inserting broadband noise across each tone of a training signal, however, the present invention, at the transmitter, intelligently injects synthetic noise at designated frequencies. Synthetic noise is a generated artificial noise as compared to actual noise present on a DSL communication channel. By intelligently adding the synthetic noise during the training period and then terminating the noise addition during showtime, mis-estimations that may have occurred are almost certainly compensated. The synthetic noise may be added by the transmitter during the SNR measurement phase of the training period. The present invention, therefore, advantageously reduces the effect of (reduces) noise estimation error and, in some embodiments, may completely overcome the noise estimation error.

Furthermore, the opportunity arises to prearrange noise in some frequencies to enable more effective margin equalization to take place at the receiver end. Margin equalization includes moving a bit (equivalent to three decibels, or dB) or a portion of a bit (less than three dB) from one frequency or frequencies to another frequency or frequencies to provide a more uniform steady-state margin distribution across all of the frequencies. Moving a bit and a portion of a bit are commonly referred to as bitswapping and power transfer, respectively.

The present invention provides a apparatus and method as set forth in the claims.

### BRIEF DESCRIPTION OF THE DRAWINGS

For a more complete understanding of the present invention, reference is made to the following description taken in conjunction with the accompanying drawings, in which:
FIGURE 1 illustrates a graphical representation of a DSL training signal, together with synthesized noise deliberately injected during the training period to reduce the noise estimation error that causes a drop in margin during showtime;
FIGURE 2 illustrates a block diagram of one embodiment of a system for reducing noise estimation error during a DSL communication session constructed according to the principles of the present invention;
FIGURE 3 illustrates a flow diagram of one embodiment of a method of reducing noise estimation error during a DSL communication session constructed according to the principles of the present invention; and
FIGURE 4 illustrates a DSL modem incorporating the system of FIGURE 2 or the method of FIGURE 3, together with a DSL CPE to a central office having another DSL modem.

### DETAILED DESCRIPTION

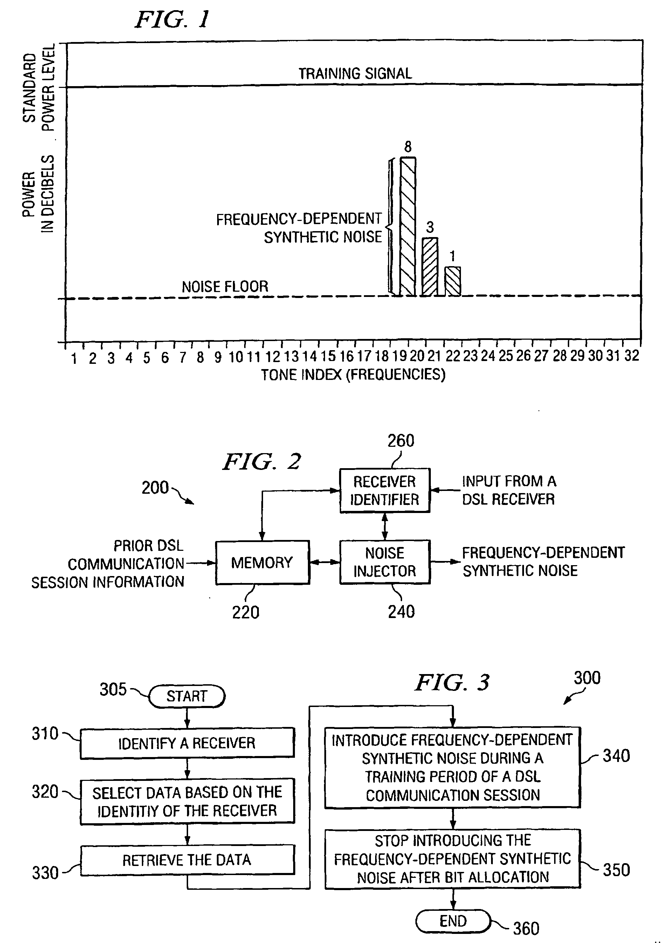

Referring initially to FIGURE 1, illustrated is a graphical representation of a DSL training signal, together with synthesized noise deliberately injected during an SNR measurement phase of a training period to reduce the noise estimation error by the receiver which results in a drop in margin during showtime. Also included in FIGURE 1 is a noise floor that illustrates actual noise encountered during the SNR measurement phase. In the illustrated embodiment, the training signal represents a standard training signal that satisfies ITU-T Recommendations for DSL transceivers. More specifically, the training signal may satisfy ITU-T Recommendation G.992.1 for ADSL transceivers. Accordingly, the power level of the training signal is set at a standard value.

The training signal is sent from a DSL transmitter to a DSL receiver during the SNR measurement phase. The frequencies comprising the DSL training signal are illustrated as 32 separate tones. Tones 20-22 include the synthetic noise injected by the transmitter during the SNR measurement phase to reduce noise mis-estimation and SNR overestimation by the receiver. As illustrated, eight decibels, three decibels and one decibel of synthetic noise have been added to Tones 20, 21 and 22, respectively. The synthetic noise added to each of Tones 20-22 is dependent on that particular tone (frequency-dependent synthetic noise). The magnitude of the synthetic noise and the tones in which the synthetic noise is applied may vary. In some embodiments, the synthetic noise may only be added to a single tone.

With the added synthetic noise, the DSL receiver will allocate fewer bits to Tones 20-22 to ensure a given steady-state margin for these tones during showtime. Thus, after the transmitter stops injecting the noise, a higher margin will occur on Tones 20-22 during showtime. For example, if a desired steady-state margin at showtime is six decibels, then the Tones 20, 21 and 22, will have 14, 9, and 4 decibels respectively of excess margin in addition to the given performance margin. This will allow more bits to be sent across Tones 20-22. Accordingly, the DSL transmitter, by injecting the frequency-dependent synthetic noise, can control bit allocation through SNR during the SNR measurement and, ultimately, margin distribution during showtime.

Additionally, the DSL receiver can utilize the excess margins provided by the said method at Tones 20-22 for margin equalization. For example, through bitswapping, the DSL receiver may move two bits to Tone 20 and one bit to Tone 21 from another tone or tones that are below the six decibel margin. Furthermore, through power transfer, the DSL receiver may move the remaining one bit of extra capacity from Tones 20-21 and the one bit from Tone 22 to another tone or tones that are below the six decibel margin. Accordingly, the DSL receiver can perform margin equalization independent of the DSL transmitter. As noted previously, every bit requires approximately three decibels of SNR. Equivalently, every bit corresponds to approximately 3 decibels of margin.

Determining to add the synthetic noise to Tones 20, 21 and 22 may be based on empirical studies. Data associated with the studies may be stored in a memory associated with the DSL transmitter and accessed during the SNR measurement phase. The studies may reveal which tones are more susceptible to an error in noise estimation during showtime. Accordingly, the synthetic noise may be added to those susceptible tones to ensure a steady-margin during showtime. Alternatively, the synthetic noise may be added to those tones that are not susceptible to the noise mis-estimation to ensure an excess margin at showtime that can then be used for margin equalization. In some embodiments, the magnitude of the synthetic noise may correlate to an amount of energy of actual noise that has reduced the steady-state margin during showtime of prior DSL communication sessions.

Turning now to FIGURE 2, illustrated is a block diagram of one embodiment of a system for reducing noise estimation error during a DSL communication session, generally designated 200, constructed according to the principles of the present invention. The system 200 includes a memory 220, a noise injector 240 and a receiver identifier 260.

The system 200 is associated with a DSL transmitter at a customer's premise that initiates the DSL communication session. In other embodiments, the DSL transmitter may be located at the CO. In some embodiments, the DSL communications session may be an ADSL communications session. The system 200 may be implemented as a sequence of operating instructions operating on general purpose hardware, as dedicated hardware or as a combination thereof.

The memory 220 is configured to contain data regarding frequency-dependent line noise experienced during a prior DSL communication session. In one embodiment, the prior DSL communication session was a single session between the DSL CPE transmitter and a DSL receiver at the CO. In other embodiments, the data represents multiple prior communication sessions between the DSL transmitter and the DSL receiver.

The data may represent an amount of margin drop for at least one tone during showtime of a prior communication session. The margin drop may be empirically determined under specific loop conditions against the DSL receiver. Identity of the DSL receiver can be determined during the training period between the DSL transmitter and receiver. More specifically, the identity of the DSL receiver can be determined during the SNR measurement phase of the training period.

The stored data may cover each frequency in a band of the DSL communication session. Of course, one skilled in the art will understand that this does not necessarily imply that synthetic noise will be added to each frequency. On the contrary, the data may provide that no synthetic noise is added to certain frequencies.

The noise injector 240, coupled to the memory 220, is configured to employ the data to introduce frequency-dependent synthetic noise during the training period of the DSL communication session. In one embodiment, the frequency-dependent synthetic noise is a predetermined amount of noise on pre-selected frequencies of a training signal that is used to calculate the SNR. As a result, the DSL receiver under-utilizes the set of frequencies with the frequency-dependent synthetic noise while allocating bits as usual to frequencies absent the frequency-dependent synthetic noise. After the DSL receiver has calculated the SNR and performed bit-allocation based thereon, the DSL transmitter can stop injecting the frequency-dependent synthetic noise. One skilled in the art will understand how synthetic noise is injected on designated frequencies.

The receiver identifier 260, coupled to the noise injector, is configured to make an identification of the DSL receiver during the training period and select the data based on the identification. The receiver identifier 260 may identify the receiver based on previous connections with the DSL receiver. In one embodiment, the receiver identifier 260 may interpret an identifying signal sent from the DSL receiver to the DSL transmitter to identify the DSL receiver. The receiver identifier 260 may include a table and employ the identifying signal with the table to identify the DSL receiver. In some embodiments, the receiver identifier 260 may also be coupled to the memory 220 and employ data stored in the memory 220 to identify the DSL receiver. One skilled in the art will understand the operation and configuration of the receiver identifier 260.

Turning now to FIGURE 3, illustrated is a flow diagram of one embodiment of a method of reducing noise estimation error during a DSL communication session, generally designated 300, constructed according to the principles of the present invention. The method 300 begins in a step 305 with a transmitter initiating a DSL communication session.

After beginning, an identification of a receiver is made in a step 310. The receiver may be identified during the training period between the transmitter and the receiver. Both the transmitter and the receiver employ DSL technology. In one embodiment, the transmitter and receiver are ADSL modems. The identification may be based on techniques well known to one skilled in the art.

After identifying, data based on the identification is selected in a step 320. The data represents frequency-dependent noise estimation error experienced during showtime of a prior DSL communication session between the transmitter and the identified receiver. In some embodiments, the data may be based on multiple prior DSL communication sessions there between.

After selecting the data, the data is retrieved in a step 330. The data may be stored in a memory associated with the transmitter and retrieved therefrom. The transmitter may be CPE. In some embodiments, the data covers each frequency in a band of a DSL communication session.

After retrieving the data, the data is employed to introduce frequency-dependent synthetic noise during the training period of the DSL communication session in a step 340. In some embodiments, this may occur during the SNR measurement phase of the training period. The frequency-dependent synthetic noise may span several adjacent frequencies in a band of the DSL communication session. Additionally, the frequency-dependent synthetic noise may have a magnitude at a particular frequency sufficient to accommodate an integer number of additional bits at that particular frequency.

After employing the data, introducing the frequency-dependent synthetic noise is stopped after a bit-allocation phase of the training period ends in a step 350. Accordingly, the magnitude of the frequency-dependent synthetic noise can be advantageously employed for margin equalization during showtime. After stopping the introduction of the frequency-dependent synthetic noise, the method 300 ends in a step 360.

While the method(s) disclosed herein has(have) been described and shown with reference to particular steps performed in a particular order, it will be understood that these steps may be combined, subdivided, or reordered to form an equivalent method without departing from the scope of the claimed invention. Accordingly, unless specifically indicated herein, the order and/or the grouping of the steps are not limitations of the present invention.

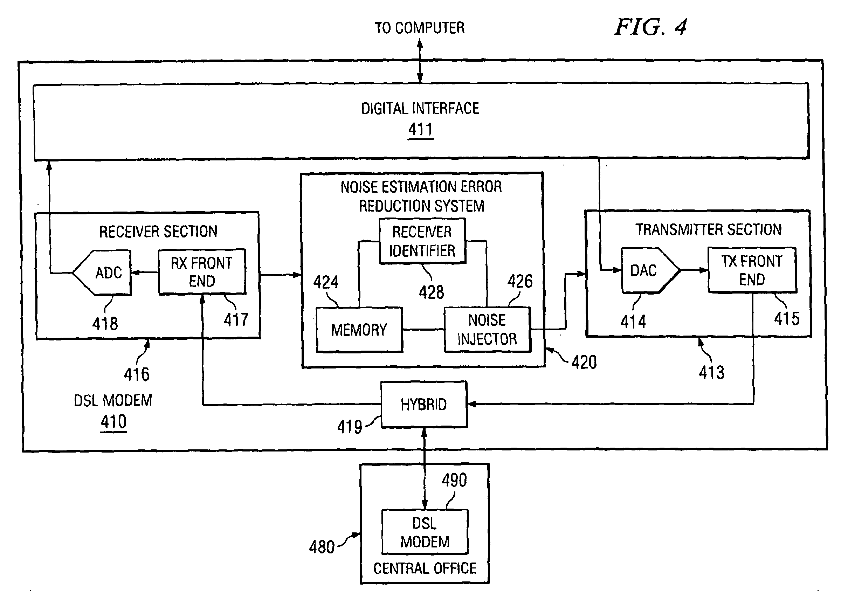

Turning now to FIGURE 4, illustrated is a DSL modem 410 incorporating the system of FIGURE 2 or the method of FIGURE 3, together with a DSL 440 to a central office 480 having another DSL modem 490. The DSL modem 410 includes a digital interface 411, a transmitter section 413, a receiver section 416, a hybrid 419 and a system to reduce noise estimation error, 420.

The DSL modem 410 is configured to communicate with the central office DSL modem 490 over the DSL 440. The DSL modem 410 is CPE. In some embodiments, the DSL modem 410 and the central office DSL modem 490 are Asymmetric DSL (ADSL) modems. In some embodiments, the transmitter i.e., 410 is a CO and the receiver i.e., 480 is a CPE. The DSL 440 and the DSL modem 490 are conventional components well known in the art.

The digital interface 411, the transmitter section 413, the receiver section 416 and the hybrid 417 are common components typical included within a conventional DSL modem. The digital interface 411 processes digital data for transmission to the central office DSL modem 490 and digital data that was received from the central office DSL modem 490. The digital data for transmission may be received from a computer associated with the DSL modem 410.

From the digital interface 411, the transmitter section 413 receives and processes the digital data for transmission to the central office DSL modem 490. The transmitter section includes components typically associated with transmitting digital data by a DSL modem. For example, the transmitter section 413 may include a scrambler that receives data from the digital interface 411, an encoder, an interleaver, a bit distributor, a mapper, a gain element, an inverse fast Fourier transform block and a cyclic extension block. Additionally, the transmitter section 413 includes digital-to-analog converter (DAC) 414 and a transmitter front end 415 that interfaces with the hybrid 419. Thus, the transmitter section 413 is configured to convert the digital data to analog data for transmission to the central office DSL modem 490 via the hybrid 419. The hybrid 419 provides an interface for the transmitter section 413 and the receiver section 416 with the DSL 440.

The receiver section 416 is configured opposite the transmitter section 413. In other words, the receiver section 416 converts analog data received from the central office DSL modem 490 to digital data. The receiver section 416 receives the analog data via the hybrid 419. The receiver section 416 typically includes a receiver front end 417 that interfaces with the hybrid 419 and an analog-to-digital converter (ADC) 418. Additionally, the receiver section 416 may include a time equalizer, a fast Fourier transform block, a frequency equalizer, a demapper, a deinterleaver, a decoder and a descrambler that provides the digital data to the digital interface 411.

The system to reduce noise estimation error 420, coupled to the transmitter section 413, is configured to reduce noise estimation error during a DSL communication session. In some embodiments, the system to reduce noise estimation error 420 may be implemented in the transmitter section 413. The system to reduce noise estimation error 420 includes a memory 424, a noise injector 426 and a receiver identifier 428. The system to reduce noise estimation error 420 is also coupled to the receiver section 416 to receive data from the central office DSL modem 490 regarding a previous communication session. In this manner, the data is automatically loaded into the memory 424. In other embodiments, the system to reduce noise estimation error 420 may not be coupled to the receiver section 416 and the data may be loaded manually to the memory 424.

The memory 424, the noise injector 426 and the receiver identifier 428 are configured and operate similar to the memory 220, the noise injector 240 and the receiver identifier 260 of FIGURE 2. The memory 424 is configured to contain data regarding frequency-dependent noise estimation error experienced during a prior DSL communication session. The noise injector 426, coupled to the memory 424, is configured to employ the data to introduce frequency-dependent synthetic noise during the training period of the DSL communication session. The noise injector 426 injects the frequency-dependent synthetic noise after the DAC converter 414. In some embodiments, the noise injector 426 may inject the frequency-dependent synthetic noise before the DAC 414 (digital synthetic noise). The frequency-dependent synthetic noise may be introduced during the SNR measurement phase of the training period.

In summary, the present invention injects frequency-dependent synthetic noise during the training period of a DSL communications session. This may occur during the SNR measurement phase of the training period. The excess margin created by the injecting allows a DSL transmitter to control bit allocation through SNR during showtime. Additionally, at showtime, the frequency-dependent synthetic noise provides a higher SNR or higher margins at designated frequencies that the DSL receiver can utilize for margin equalization. Advantageously, the present invention can be employed within the present standards for DSL communications.

## Claims

1. A method (300) of reducing noise estimation error in a receiver during a digital subscriber line DSL communication session between a transmitter and the receiver, comprising:
retrieving (330) data regarding frequency-dependent line noise experienced during a prior DSL communication session; and **characterized by**
employing said data to introduce (340) frequency-dependent synthetic noise to the transmitter during a training period of said DSL communication session, wherein said noise estimation error is receiver dependent.

2. The method (300) as recited in Claim 1, further comprising:
stopping (350) said noise after a bit-allocation phase of said training period ends.

3. The method (300) as recited in Claim 1 or 2, wherein said employing comprises causing said frequency-dependent synthetic noise to have a magnitude at a particular frequency or set of frequencies sufficient to accommodate an integer number of additional bits which may be equivalent to a predetermined amount of excess margin in decibels at said particular frequency or set of frequencies.

4. The method (300) as recited in any of Claims 1 - 3, wherein method further comprises:
making an identification (310) of the receiver during said training period; and
selecting (320) said data based on said identification.

5. The method (300) as recited in any of Claims 1 - 4, wherein said data covers each frequency in a band of said DSL communication session, and said DSL communication session is an asymmetric DSL communication session.

6. The method (300) as recited in any of Claims 1 - 5, wherein said frequency-dependent synthetic noise spans several adjacent frequencies in a band of said DSL communication session.

7. The method (300) as recited in any of Claims 1 - 6, wherein said method is carried out in a customer premises equipment modem.

8. A system (420) to reduce noise estimation error in a receiver during a digital subscriber line DSL communication session between a transmitter and the receiver, comprising:
a memory (424) associated with the transmitter configured to contain data regarding frequency-dependent line noise experienced during a prior DSL communication session; and **characterized by**
a noise injector (426) coupled to said memory (424) and configured to employ said data to introduce frequency-dependent synthetic noise to the transmitter during a training period of said DSL communication session, wherein said noise estimation error is receiver dependent.

9. The system (420) as recited in Claim 8, wherein said system further comprises a receiver identifier (428) coupled to said noise injector (426) and configured to make an identification of a receiver (490) during said training period and select said data based on said identification.

10. A digital subscriber line DSL modem (410), comprising:
a digital interface (411);
a transmitter (413) coupled to the digital interface (411) and having a digital-to-analog converter (414);
a hybrid (419) coupled to the transmitter (413) and couplable to a DSL for communication with a receiver; **characterized in that** said modem further comprises
a memory (424) associated with the transmitter configured to contain data regarding frequency-dependent line noise experienced during a prior DSL communication session; and
a noise injector (426) coupled to said memory (424) and configured to employ said data to introduce frequency-dependent synthetic noise to the transmitter during a training period of a DSL communication session between the transmitter and the receiver in order to reduce noise estimation error in the receiver during said digital subscriber line DSL communication session, wherein said noise estimation error is receiver dependent.

## Patentansprüche

1. Ein Verfahren (300) der Abnahme von Rauschschätzungsfehler in einem Empfänger während einer digitalen DSL-Kommunikation zwischen einem Sender und dem Empfänger, bestehend aus:
dem Retrieval (330) von Daten in Bezug auf frequenz-abhängigen Leitungsrausch, der während einer vorherigen DSL-Kommunikation erfährt worden ist; und **dadurch gekennzeichnet**:
der Gebrauch von den o.g. Daten, um zum Sender frequenzabhängiger synthetischer Rausch während einer Ausbildungszeit der o.g. DSL-Kommunikation einzusetzen (340), wobei der o.g. Rauschschätzungsfehler Empfängerabhängig ist.

2. Der Verfahren (300) nach Anspruch 1, dazu bestehend aus:
der Sperrung (350) des o.g. Rausches nach einer Bitzuweisungsphase der o.g. Ausbildungszeit zu Ende ist.

3. Der Verfahren (300) nach Ansprüchen 1 oder 2, wobei der o.g. Gebrauch den frequenz-abhängigen synthetischen Rausch veranlasst, den Wert bei einer bestimmten Frequenz oder einer Gruppe von Frequenzen genug für die Einrichtung von einer geraden Zahl von zusätzlichen Bits zu haben, welcher Wert einer vorherbestimmten Menge von dem Margenüberschuss in Dezibel bei der o.g. bestimmten Frequenz oder Gruppe von Frequenzen entspricht.

4. Der Verfahren (300) nach Ansprüchen 1 - 3, wobei der Verfahren dazu besteht aus:
der Bezeichnung (310) vom Empfänger während der o.g. Ausbildungszeit; und
der Auswahl (320) von den o.g. Daten nach der o.g. Bezeichnung.

5. Der Verfahren (300) nach Ansprüchen 1 - 4, wobei die o.g. Daten jede Frequenz in einem Band der o.g. DSL-Kommunikation einschliesst, und die o.g. DSL-Kommunikation ist eine asymmetrische DSL-Kommunikation.

6. Der Verfahren (300) nach Ansprüchen 1 - 5, wobei der o.g. frequenz-abhängige synthetische Rausch mehrere angrenzende Frequenzen in einem Band von der o.g. DSL-Kommunikation einschliesst.

7. Der Verfahren (300) nach Ansprüchen 1 - 6, wobei der o.g. Verfahren in dem Equipmentmodem des Kundenbetriebsgebäudes realisiert wird.

8. Eine Anlage (420), um Rauschschätzungsfehler in einem Empfänger während einer DSL-Kommunikation zwischen einem Sender und dem Empfänger zu vermindern, bestehend aus:
einem konfigurierten Speicher (424), der in Zusammenhang mit dem Sender steht, um die Daten bezüglich frequenz-abhängigen Leitungsrausches zu enthalten, der während einer früheren DSL-Kommunikation erfährt wird; und **dadurch gekennzeichnet**
ein Rauscheinspritz (426) gekoppelt zum o.g. Speicher und konfiguriert, um die Daten zu benutzen, um der frequenz-abhängige synthetische Rausch zu dem Sender während einer Ausbildungszeit der o.g. DSL-Kommunikation einzusetzen, wobei der Räuschschätzungsfehler Empfängerabhängig ist.

9. Die Anlage (420) nach Anspruch 8, wobei die o.g. Anlage dazu einschliesst, einen Empfängerbezeichner (428) gekoppelt zum o.g. Rauscheinspritzer (426) und konfiguriert, um eine Bezeichnung eines Empfängers (490) während der o.g. Ausbildingszeit zu machen und die o.g. Daten bezüglich der o.g. Bezeichnung zu wählen.

10. Ein digitaler DSL-modem (410) bestehend aus:
einer Digitalschnittstelle (411);
einem Sender gekoppelt zu der Digitalschnittstelle (411) und mit einem Digital-Analog-Wandler (414);
einem Hybrid (419) gekoppelt zu dem Sender (413) und koppelbar zu einem DSL für Komminikation mit einem Empfänger; **dadurch gekennzeichnet, dass** der o.g. Modem dazu besteht aus
einem Speicher (424) in Verbindung mit dem Sender, der konfiguriert wird, um Daten in Bezug auf frequenz-abhangigen Leitungsrausch zu behalten, welcher während einer vorhergehenden DSL-Kommunikation erfährt wird; und
einem Rauscheinspritz (426) gekoppelt zum o.g. Speicher (424) und konfiguriert, um die o.g. Daten für die Einführung von frequenz-abhängigen synthetischen Rausch zum Sender während eine Ausbildungszeit einer DSL-Kommunikation zwischen dem Sender und dem Empfänger zu benutzen, um der Rauschschätzungsfehler in dem Empfänger während der o.g. DSL-Kommunikation zu vermindern, wobei der Rauschschätzungsfehler Empfänger-abhängig ist.

## Revendications

1. Une méthode (300) de réduire l'erreur d'estimation de bruit dans un récepteur pendant une communication de ligne d'abonné numérique DSL entre un transmetteur et le récepteur, comprenant :
l'extraction (330) de données concernant le bruit de ligne dépendant de la fréquence éprouvé pendant une communication antérieure de DSL ; et **caractérisé par**
l'utilisation desdites données pour présenter (340) le bruit synthétique dépendant de la fréquence au transmetteur pendant une période de formation de ladite communication de DSL, où ledit erreur d'estimation de bruit est dépendant du récepteur.

2. La méthode (300) selon la revendication 1, comprenant en plus:
l'arrêt (350) dudit bruit après le fin d'une phase d'attribution binaire de ladite période de formation.

3. La méthode (300) selon la revendication 1 ou 2, où ladite utilisation comprend faire avoir ledit bruit synthétique dépendant de la fréquence une grandeur suffisante à une fréquence particulière ou à une ensemble de fréquences pour adapter à un nombre entier de bits additionnels qui est un équivalent d'une quantité prédéterminée de marge excessive en décibels à ladite fréquence particulière ou à l'ensemble de fréquences.

4. La méthode (300) selon les revendications 1-3, où la méthode comprend en plus:
une identification (310) du récepteur au cours de ladite période de formation; et
la sélection (320) desdites données basée sur ladite identification.

5. La méthode (300) selon les revendications 1-4, où lesdites données comprennent chaque fréquence dans une bande de ladite communication de DSL, et ladite communication de DSL est une communication asymétrique de DSL.

6. La méthode (300) selon les revendications 1-5, où ledit bruit synthétique dépendant de la fréquence comprend plusieurs fréquences adjacentes dans une bande de ladite communication de DSL.

7. La méthode (300) selon les revendications 1-6, où ladite méthode est effectuée dans un modem d'équipement de lieux de client.

8. Un système (420) pour réduire l'erreur d'évaluation de bruit dans un récepteur pendant une communication de ligne d'abonné numérique DLS entre un transmetteur et le récepteur, comprenant:
une mémoire (424) liée au transmetteur configurée pour contenir des données concernant le bruit de ligne dépendant de la fréquence éprouvé pendant une communication antérieure de DSL; et **caractérisé par**
un injecteur de bruit (426) couplé de ladite mémoire (424) et configuré pour l'utilisation desdites données pour présenter le bruit synthétique dépendant de la fréquence au transmetteur pendant une période de formation de ladite communication de DSL, où ledit erreur d'estimation de bruit est dépendant du récepteur.

9. Le système (420) selon la revendication 8, où ledit système comprend en plus un identifiant de récepteur (428) couplé audit injecteur de bruit (426) et configuré pour faire une identification d'un récepteur (490) pendant ladite période de formation et sélectionner lesdites données basées sur ladite identification.

10. Un modem de la ligne d'abonné numérique DSL (410), comprenant :
une interface numérique (411) ;
un transmetteur (413) couplé à l'interface numérique (411) et ayant un convertisseur numérique-analogique (414) ;
un hybride (419) couplé au transmetteur (413) et couplable à un DSL pour la communication avec un récepteur; **caractérisé en ce que** ledit modem comprend en plus
une mémoire (424) liée au transmetteur configurée pour contenir des données concernant le bruit de la ligne dépendant de la fréquence éprouvé pendant une communication antérieure de DSL; et
un injecteur de bruit (426) couplé à ladite mémoire (424) et configuré pour l'utilisation desdites données pour présenter le bruit synthétique dépendant de la fréquence au transmetteur pendant une période de formation d'une communication de DSL entre le transmetteur et le récepteur afin de réduire l'erreur d'estimation de bruit dans le récepteur pendant ladite communication de la ligne d'abonné numérique DSL, où ledit erreur d'estimation de bruit est dépendent du récepteur.
